# EUROPÄISCHE PATENTSCHRIFT

(11) **EP 3 752 334 B1**
(45) Veröffentlichungstag und Bekanntmachung des Hinweises auf die Patenterteilung: **15.06.2022**
(21) Anmeldenummer: 19712895.2
(22) Anmeldetag: 13.02.2019
(51) Int. Cl.: B29C 44/28, B29C 44/34, B29C 35/08, B29C 44/60, B29C 44/54

(54) **VERFAHREN UND VORRICHTUNG ZUM AUFSCHÄUMEN EINES EXPANSIONSFÄHIGEN PARTIKELSCHAUMMATERIALS**
METHOD AND DEVICE FOR FOAMING AN EXPANDABLE PARTICULATE FOAM MATERIAL
PROCÉDÉ ET DISPOSITIF DESTINÉS À FAIRE MOUSSER UN MATÉRIAU EXPANSIBLE EN MOUSSE DE PARTICULES

(30) Priorität: 13.02.2018 AT 501322018
(43) Veröffentlichungstag der Anmeldung: 23.12.2020
(73) Patentinhaber: Fill Gesellschaft m.b.H., 4942 Gurten (AT)
(72) Erfinder: HOHENSINNER, Heinz, 4981 Reichersberg (AT)
(74) Vertreter: Burger, Hannes
(86) Internationale Anmeldenummer: PCT/AT2019/060055
(87) Internationale Veröffentlichungsnummer: WO 2019/157547

(56) Entgegenhaltungen:
- AT-A1- 518 099
- DE-T2- 69 412 970
- US-A- 3 832 429
- US-A- 3 992 501
- US-A1- 2007 252 301

## Beschreibung

Die Erfindung betrifft ein Verfahren zur Herstellung eines geschäumten Partikelschaummaterials gemäß Oberbegriff des Anspruch 1 sowie eine Vorrichtung zur Herstellung eines geschäumten Partikelschaummaterials gemäß Oberbegriff des Anspruch 6.

Polymerschäume, insbesondere aus Polystyrol (PS), werden in einem mehrstufigen Verfahren vom Ausgangsprodukt, einem Polystyrol-Granulat bzw. Polystyrol-Perlen, zum fertigen Schaumteil, bspw. Wärmedämmplatten, Wärmedämm-Formteile oder Transportverpackungen, verarbeitet. In einem Vorschäumprozess wird das treibmittelbeladene Granulat unter einer Volumensvergrößerung zu Schaumperlen bzw. dem Schaum-Zwischenprodukt vorgeschäumt, wobei dieses Schaum-Zwischenprodukt ganz wesentlich die mechanischen und thermischen Eigenschaften des Endprodukts bestimmt. Ein Polymerschaum, insbesondere ein Polystyrol-Partikelschaumstoff, ist bei der Wärmedämmung von Altbauten bzw. Neubauten, derzeit der wichtigste Werkstoff. Im Zuge weiterer gesetzlicher Vorgaben wird eine immer bessere Wärmedämmung von Gebäuden gefordert, welche durch eine Erhöhung der Dicke der Wärmedämmschicht erreicht werden kann, oder es wird die Wärmeleitfähigkeit des Dämmmaterials reduziert. Für die praktische Anwendung ebenso von Bedeutung ist die mechanische Festigkeit, wobei bekannt ist, dass eine erhöhte Festigkeit mit einem erhöhten Materialeinsatz des Ausgangsstoffes verbunden ist. Eine größere Menge des Ausgangsstoffes verschlechtert jedoch die Wärmedämmeigenschaften, sodass hier ein Kompromiss gefunden werden muss. Aus der Literatur ist ferner bekannt, dass sich die Wärmeleitfähigkeit durch Vergrößerung des Verhältnisses Zelle / Wandstärke reduzieren lässt. Dadurch wird es ermöglicht, die Wärmeleitfähigkeit quasi entkoppelt von den mechanischen Eigenschaften zu variieren.

Aus der EP 0 348 372 B1, der US 3,015,479 A, der AT 518 099 A1, die ein Verfahren nach dem Oberbegriff des Anspruchs 1 und eine Vorrichtung nach dem Oberbegriff des Anspruchs 6 offenbart, und der DE 10 2013 225 132 A1 sind diverse Verfahren und Vorrichtungen zum Herstellen von Partikelschaummaterialen bekannt. Diese Verfahren und Vorrichtungen weisen den Nachteil auf, dass nur ein unzureichendes Aufschäumergebnis erreicht werden kann.

Aufgabe der vorliegenden Erfindung war es, die Nachteile des Standes der Technik zu überwinden und eine Vorrichtung und ein Verfahren zur Verfügung zu stellen, mittels derer das Aufschäumergebnis verbessert werden kann.

Diese Aufgabe wird durch eine Vorrichtung und ein Verfahren gemäß den Ansprüchen gelöst.

Die aus dem Stand der Technik bekannten Verfahren und Vorrichtungen zum Herstellen von Partikelschaummaterialien weisen insbesondere den Nachteil auf, dass der Aufschäumvorgang nur durch Variation der Fördergeschwindigkeit, der Abstrahlleistung des Infrarotstrahlers oder dem Abstand des Infrarotstrahlers zur Fördervorrichtung geregelt werden kann. Diese bekannten Regelmöglichkeiten sind jedoch nicht ausreichend, um eine konstante Qualität des aufgeschäumten Partikelschaummaterials erreichen zu können.

Erfindungsgemäß ist ein Verfahren zum Aufschäumen eines expansionsfähigen Partikelschaummaterials in Form eines Granulats vorgesehen, wobei das Verfahren folgende Verfahrensschritte umfasst:
- Einbringen des Partikelschaummaterials in den Innenraum eines Aufschäumofens;
- Bestrahlen des Partikelschaummaterials mittels einem im Innenraum des Aufschäumofens angeordneten Infrarotstrahlers;
- Herausführen des Partikelschaummaterials aus dem Innenraum des Aufschäumofens.

Hierbei ist vorgesehen, dass eine Abstrahlleistung des Infrarotstrahlers festgelegt wird und die Temperatur im Innenraum des Aufschäumofens mittels einer Temperiervorrichtung aktiv geregelt wird, sodass die Temperatur Innenraum des Aufschäumofens unabhängig von der festgelegten Abstrahlleistung des Infrarotstrahlers auf einen vorbestimmbaren Temperaturbereich geregelt wird.

Durch das erfindungsgemäße Verfahren kann eine überraschend gute Qualität des aufgeschäumten Partikelschaummaterials erreicht werden. Dies ist insbesondere darauf zurückzuführen, dass die Temperatur im Innenraum des Aufschäumofens auf einen vorbestimmbaren Temperaturbereich geregelt werden kann, welcher über die Laufdauer des Aufschäumvorganges konstant gehalten werden kann. Durch diese Maßnahme kann im Gegensatz zu den bekannten Ausführungen die Abstrahlleistung des Infrarotstrahlers und somit die Wellenlänge der Strahlung auf einen Idealwert für den Aufschäumvorgang eingestellt werden und kann diese Abstrahlleistung des Infrarotstrahlers während dem Aufschäumvorgang konstant gehalten werden. Dies hat zur Folge, dass die vom Infrarotstrahler abgegebene elektromagnetische Strahlung eine konstante Wellenlänge in einem vorgegebenen Wellenlängenbereich aufweisen kann, ohne dass es zu einer Überhitzung des Partikelschaummaterials kommt. Darüber hinaus weist das erfindungsgemäße Verfahren den Vorteil auf, dass ein Abstand zwischen dem Infrarotstrahler und der Oberfläche einer Fördervorrichtung zum Fördern des Partikelschaummaterials nicht variiert werden muss. Durch den Einsatz der Temperiervorrichtung mittels welcher die Temperatur im Innenraum des Aufschäumofens geregelt wird, kann der Aufschäumofen darüber hinaus weitestgehend luftdicht abgeschlossen werden, sodass ein Wärmetransport durch Konvektion vom Innenraum zum Äußeren des Ofens ausschließlich durch das Partikelschaummaterial bzw. durch Einlassöffnungen und Auslassöffnungen zum Transport des Partikelschaummaterials in den Innenraum des Aufschäumofens erfolgt. Dies bewirkt ebenfalls eine überraschende Steigerung in der Qualität des aufgeschäumten Partikelschaummaterials .

Weiters kann es zweckmäßig sein, wenn der Temperaturbereich zwischen 80°C und 450°C, insbesondere zwischen 120°C und 170°C beträgt. Vor allem in diesem Temperaturbereich kann eine gute Aufschäumung des Partikelschaummaterials erreicht werden. Dieser Temperaturbereich kann unabhängig von den weiteren Parametern der Aufschäumvorrichtung bzw. des Aufschäumverfahrens in einer aktiven Regelung durch aktive Wärmezufuhr bzw. Wärmeabfuhr eingestellt werden.

Ferner kann vorgesehen sein, dass die Temperatur im Innenraum des Aufschäumofens mittels einem im Innenraum des Aufschäumofens angeordneten Temperatursensor erfasst wird. Durch diese Maßnahme kann die Temperatur im Innenraum des Aufschäumofens exakt bestimmt werden, wodurch in weiterer Folge die Temperatur auf einen exakten Wert geregelt werden kann.

In einer alternativen Ausführungsvariante kann vorgesehen sein, dass die Temperatur im Innenraum des Aufschäumofens durch eine Modellrechnung auf Basis der Geometrie und der Isolationswerte des Aufschäumofens, der eingestellten Abstrahlleistung des Infrarotstrahlers, und des Volumenstroms des Partikelschaummaterials berechnet wird. Dies bringt den Vorteil mit sich, dass die Temperatur im Innenraum des Aufschäumofens nicht gemessen werden muss, sondern dass sie unter Kenntnis aller Parameter im Prozess des Aufschäumofens sowie der Eigenschaften des Aufschäumofens und der eingebrachten Wärmemenge einer Modellrechnung berechnet wird.

Vorteilhaft ist auch eine Ausprägung, gemäß welcher vorgesehen sein kann, dass die Leistung des Infrarotstrahlers derart gewählt wird, dass dieser eine elektromagnetische Strahlung mit einer Wellenlänge im Bereich von 0,8µm bis 8,0µm, vorzugsweise von 2,5µm bis 3,5µm, abgibt. Eine elektromagnetische Strahlung mit dieser Wellenlänge hat sich als besonders vorteilhaft zum Aufschäumen des Partikelschaummaterials erwiesen.

Insbesondere kann vorgesehen sein, dass die Temperierung des Innenraums des Ofens mittels der Temperiervorrichtung ausschließlich durch Wärmeleitung über die Oberflächen der Temperiervorrichtung erfolgt, wobei außer über die Einlassöffnung und die Auslassöffnung der Fördervorrichtungen kein Luftaustausch zwischen dem Innenraum des Ofens und dem Außenbereich des Ofens stattfindet.

Erfindungsgemäß ist außerdem eine Aufschäumvorrichtung zum Aufschäumen eines expansionsfähigen Partikelschaummaterials vorgesehen. Die Aufschäumvorrichtung umfasst einen Aufschäumofen, welcher einen Innenraum zur Aufnahme des expansionsfähigen Partikelschaummaterials aufweist, wobei ein Infrarotstrahler ausgebildet ist, welcher im Innenraum des Aufschäumofens angeordnet ist. Weiters ist eine Temperiervorrichtung ausgebildet, mittels welcher die Temperatur im Innenraum des Aufschäumofens unabhängig von der eingestellten Abstrahlleistung des Infrarotstrahlers auf einen vorbestimmbaren Temperaturbereich geregelt werden kann.

Die erfindungsgemäße Aufschäumvorrichtung weist den überraschenden Vorteil auf, dass ein aufgeschäumtes Partikelschaummaterial mit einer besonders guten und gleichmäßigen Qualität erzeugt werden kann. Dies wird insbesondere durch die Temperiervorrichtung erreicht, mittels welcher unabhängig von den weiteren Paramtern die Temperatur im Innenraum des Aufschäumofens konstant gehalten werden kann.

Ferner kann es zweckmäßig sein, wenn die Temperiervorrichtung zumindest einen Wärmetauscher umfasst, welcher im Innenraum des Aufschäumofens angeordnet ist. Besonders mittels einem Wärmetauscher lässt sich die Temperierung des Innenraums des Ofens gut bewerkstelligen.

Darüber hinaus kann vorgesehen sein, dass eine Fördervorrichtung ausgebildet ist, welche zum Durchführen eines Volumenstroms des Partikelschaummaterials durch den Aufschäumofen dient. Durch diese Maßnahme kann ein kontinuierlicher Prozess zum Aufschäumen des Partikelschaummaterials erreicht werden.

Weiters kann vorgesehen sein, dass der Aufschäumofen derart geschlossen ausgebildet ist, dass in dessen Betriebszustand eine Luftströmung zwischen dem Innenraum des Aufschäumofens und der Umgebung ausschließlich über eine Einlassöffnung für die Fördervorrichtung und eine Auslassöffnung für die Fördervorrichtung erfolgen kann. Durch diese Maßnahme kann ein besonders gutes und stabiles Ergebnis der Aufschäumung des Partikelschaummaterials erreicht werden.

Gemäß einer besonderen Ausprägung ist es möglich, dass in zumindest einer der Wände des Aufschäumofens eine Kühlmittelleitung ausgebildet ist. Dies kann zusätzlich oder alternativ zum Wärmetauscher erfolgen. Die Wände des Aufschäumofens können durch diese Maßnahme aktiv gekühlt werden und somit ebenfalls als Wärmetauscher eingesetzt werden.

Zum besseren Verständnis der Erfindung wird diese anhand der nachfolgenden Figuren näher erläutert.

Es zeigen jeweils in stark vereinfachter, schematischer Darstellung:
- Fig. 1: ein erstes Ausführungsbeispiel einer Aufschäumvorrichtung mit in einem Innenraum eines Aufschäumofens angeordneten Wärmetauschern;
- Fig. 2: ein zweites Ausführungsbeispiel der Aufschäumvorrichtung mit in Wänden des Aufschäumofens angeordneten Kühlmittelleitungen;
- Fig. 3: ein drittes Ausführungsbeispiel der Aufschäumvorrichtung mit diskontinuierlicher Zuführung des Partikelschaummaterials zum Aufschäumofen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

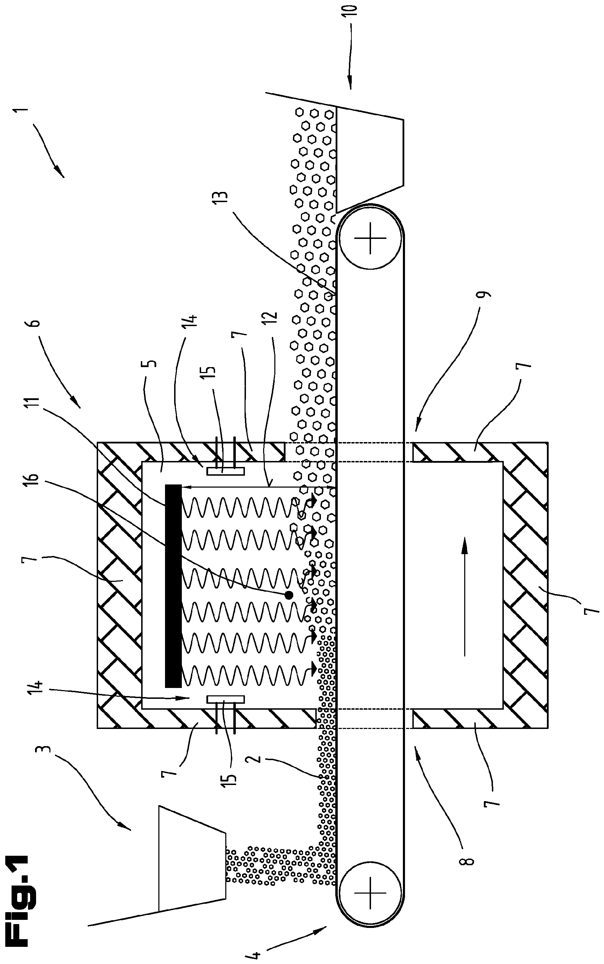

Fig. 1 zeigt ein erstes Ausführungsbeispiel einer Aufschäumvorrichtung 1 zum Aufschäumen von Partikelschaummaterial 2.

Die Aufschäumvorrichtung 1 umfasst eine Granulatbereitstellungsvorrichtung 3 mittels welcher das Partikelschaummaterial 2 auf eine Fördervorrichtung 4 aufgegeben werden kann.

Die Fördervorrichtung 4 verläuft durch einen Innenraum 5 eines Aufschäumofens 6 in welchem das Partikelschaummaterial 2 aufgeschäumt werden kann. Unter Aufschäumen versteht man die Vergrößerung des Volumens des Partikelschaummaterials 2.

Der Innenraum 5 des Aufschäumofens 6 ist durch mehrere Wände 7 begrenzt, welche für eine Isolierung des Innenraums 5 des Aufschäumofens 6 sorgen.

In zwei einander gegenüberliegend angeordneten Wänden 7 ist eine Einlassöffnung 8 bzw. eine Auslassöffnung 9 ausgebildet, durch welche die Fördervorrichtung 4 geführt ist. Die Einlassöffnung 8 bzw. die Auslassöffnung 9 sind vorzugsweise möglichst klein dimensioniert, sodass sie möglichst eng an der Fördervorrichtung 4 bzw. am an der Fördervorrichtung 4 aufgenommenen Partikelschaummaterial 2 ausgebildet sind. Dadurch kann ein Luftaustausch zwischen dem Innenraum 5 des Aufschäumofens 6 und der Umgebung des Aufschäumofens 6 weitestgehend unterbunden werden. Somit kann auch Konvektion zwischen dem Innenraum 5 des Aufschäumofens 6 und dem Außenraum des Aufschäumofens 6 weitestgehend vermieden werden. Dies führt zu einem besonders guten Aufschäumergebnis.

Weiters ist eine Entnahmevorrichtung 10 ausgebildet, in welche das aufgeschäumte Partikelschaummaterial 2 mittels der Fördervorrichtung 4 transportiert werden kann.

Bei der Aufschäumvorrichtung 1 gemäß dem Ausführungsbeispiel nach Fig. 1 handelt es sich um eine kontinuierlich arbeitende Aufschäumvorrichtung 1. Die Fördervorrichtung 4 kann hierbei in Form eines Bandförderers ausgebildet sein. Alternativ dazu kann auch vorgesehen sein, dass die Fördervorrichtung 4 beispielsweise in Form einer Förderschnecke oder in Form eines Kratzbodenförderers ausgebildet ist.

Wie aus Fig. 1 ersichtlich, ist im Innenraum 5 des Aufschäumofens 6 ein Infrarotstrahler 11 angeordnet, welcher zum Anregen des Aufschäumvorganges des Partikelschaummaterials 2 dient. Der Infrarotstrahler 11 ist hierbei in Fig. 1 nur schematisch dargestellt. Der Infrarotstrahler 11 ist in einem Abstand 12 zu einer das Partikelschaummaterial 2 aufnehmenden Oberfläche 13 der Fördervorrichtung 4 beabstandet.

In einem ersten Ausführungsbeispiel kann hierbei vorgesehen sein, dass der Infrarotstrahler verschiebbar im Innenraum 5 des Aufschäumofens 6 aufgenommen ist, sodass der Abstand 12 variiert werden kann.

In einem weiteren Ausführungsbeispiel kann auch vorgesehen sein, dass der Infrarotstrahler 11 fest im Innenraum 5 des Aufschäumofens 6 aufgenommen ist.

Der elektrisch betriebene Infrarotstrahler 11 umfasst in der Regel ein Metallgehäuse, das für die nötige Stabilität sorgt. Im Metallrahmen ist Isolationsmaterial integriert, welches den Energiefluss zur Strahlerrückseite blockiert. Durch eine gewellte Metallfolie als Widerstandsmaterial, ist für eine große Abstrahlfläche gesorgt. Meist folgt frontseitig noch ein Schutzgitter, das vor mechanischer Beschädigung und Berührung schützt. Ein so aufgebauter IR-Strahler zeichnet sich durch eine flächige Strahlung aus. Dabei werden 92 % der eingesetzten Energie direkt zum behandelten Produkt abgestrahlt, was den Einsatz von Reflektoren überflüssig macht. Ein solcher Infrarotstrahler 11 kann beispielsweise mit einer Temperatur von 850°C betrieben werden, was einer Wellenlänge von ca. 3,5µm entspricht.

Die Wellenlänge der abgegebenen Strahlung des Infrarotstrahlers 11 ist von dessen Abgabeleistung und somit auch von dessen Abgabetemperatur abhängig. Um ein gutes Aufschäumergebnis zu erzielen, hat es sich als vorteilhaft erwiesen, den Infrarotstrahler 11 mit einer Wellenlänge von 2 µm bis 4 µm zu betreiben. Da die Abgabetemperatur bei dieser Wellenlänge in etwa im Bereich von 700°C bis 900°C liegt, wird sich während dem Betrieb auch der Innenraum 5 des Aufschäumofens 6 auf eine erhöhte Temperatur von über 500°C erwärmen, was zu einem verschlechterten Aufschäumergebnis führen würde.

Ein überraschend gutes Aufschäumergebnis kann dadurch erreicht werden, dass der Aufschäumofen 6 eine Temperiervorrichtung 14 aufweist, mittels welcher die Temperatur im Innenraum 5 des Aufschäumofens 6 unabhängig von der eingestellten Wellenlänge des Infrarotstrahlers 11 auf einen vorbestimmten Wert bzw. Wertebereich geregelt werden kann.

Wie aus Fig. 1 ersichtlich, kann vorgesehen sein, dass die Temperiervorrichtung 14 einen Wärmetauscher 15 umfasst, welcher im Innenraum 5 des Aufschäumofens 6 angeordnet ist. Insbesondere können mehrere der Wärmetauscher 15 ausgebildet sein, welche im Innenraum 5 des Aufschäumofens 6 angeordnet sind. Der oder die Wärmetauscher 15 können hierbei an einer Innenseite der Wand 7 des Aufschäumofens 6 befestigt sein. Insbesondere kann vorgesehen sein, dass der Wärmetauscher 15 über eine Vorlaufleitung und eine Rücklaufleitung mittels einem Fluid durchströmt wird, welches für den Wärmetransport dient. Der Wärmetauscher 15 kann hierbei zum Kühlen des Innenraum 5 des Aufschäumofen 6 dienen. Während einer Aufwärmphase der Aufschäumvorrichtung 1 kann der Wärmetauscher 15 auch zum Heizen des Innenraums 5 des Aufschäumofens 6 verwendet werden.

Insbesondere kann vorgesehen sein, dass mittels dem Wärmetauscher 15 die Temperatur im Innenraum 5 des Aufschäumofens 6 auf einen konstanten Wertebereich geregelt werden kann. Zur Regelung kann in einem ersten Ausführungsbeispiel vorgesehen sein, dass im Innenraum 5 des Aufschäumofens 6 ein Temperatursensor 16 angeordnet ist, welcher zur Erfassung der Temperatur im Innenraum 5 des Aufschäumofens 6 dient. Der Temperatursensor 16 kann in etwa mittig des Aufschäumofens 6 im Nahbereich zur Oberfläche 13 der Fördervorrichtung 4 und somit im Nahbereich zum Partikelschaummaterial 2 angeordnet sein. Somit kann die tatsächlich auf das Partikelschaummaterial einwirkende Temperatur erfasst werden. Insbesondere kann hierbei vorgesehen sein, dass der Temperatursensor 16 in einem Abstand zwischen 1 cm und 20 cm, bevorzugt zwischen 5 cm und 10 cm, zur Oberfläche 13 der Fördervorrichtung 4 beabstandet ist.

Durch die erfindungsgemäße Aufschäumvorrichtung 1 kann der Abstand 12 zwischen der Oberfläche 13 der Fördervorrichtung 4 und dem Infrarotstrahler 11 sowie die Wellenlänge des Infrarotstrahlers 11 auf einen Idealwert voreingestellt werden und die Prozessstabilität kann mittels der Temperiervorrichtung 14 erreicht werden.

Weiters kann vorgesehen sein, dass die Wärmetauscher 15 derart im Innenraum 5 des Aufschäumofens 6 angeordnet sind, sodass die Luftverwirbelungen im Innenraum 5 des Aufschäumofens 6 aufgrund der Temperaturunterschiede möglichst gering gehalten werden. Somit kann die Konvektion im Innenraum 5 des Aufschäumofens 6 möglichst gering gehalten werden. In Versuchen hat sich gezeigt, dass sämtliche durch Konvektion hervorgerufene Wärmeenergietransporte die Qualität des aufgeschäumten Partikelschaummaterials 2 verschlechtern. Somit ist es zielführend, wenn der Innenraum 5 des Aufschäumofens 6 derart gestaltet wird, dass Luftzirkulationen im Innenraum 5 des Aufschäumofens 6 möglichst hintangehalten werden.

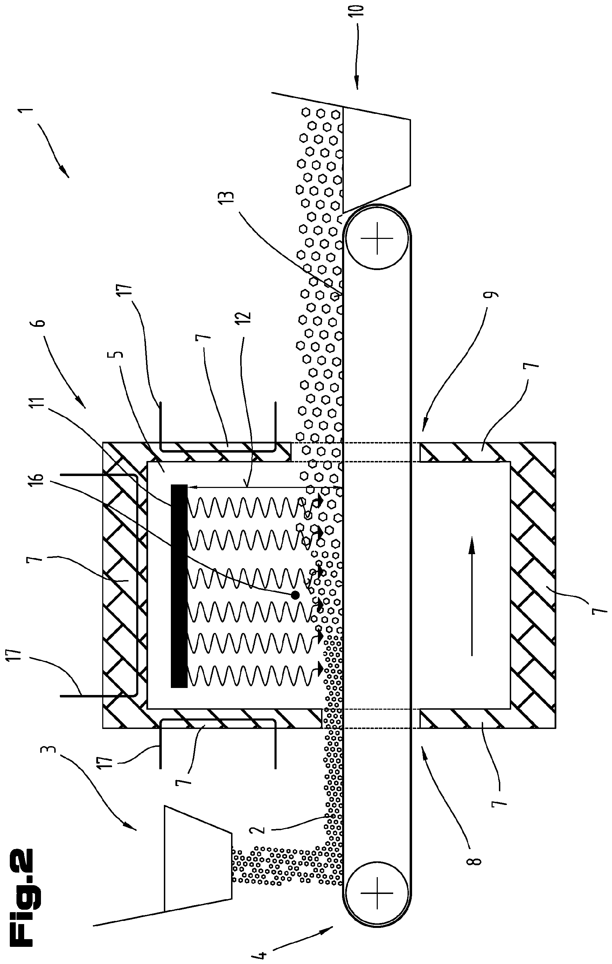

In der Fig. 2 ist eine weitere und gegebenenfalls für sich eigenständige Ausführungsform der Aufschäumvorrichtung 1 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

Die Aufschäumvorrichtung 1 der Fig. 2 ist grundsätzlich ähnlich aufgebaut wie die Aufschäumvorrichtung 1 der Fig. 1, wobei alternativ oder zusätzlich zu den Wärmetauschern 15 auch vorgesehen sein kann, dass direkt in den Wänden 7 des Aufschäumofens 6 Kühlmittelleitungen 17 angeordnet sind, welche als Temperiervorrichtung 14 zur Temperierung des Innenraums 5 des Aufschäumofens 6 dienen.

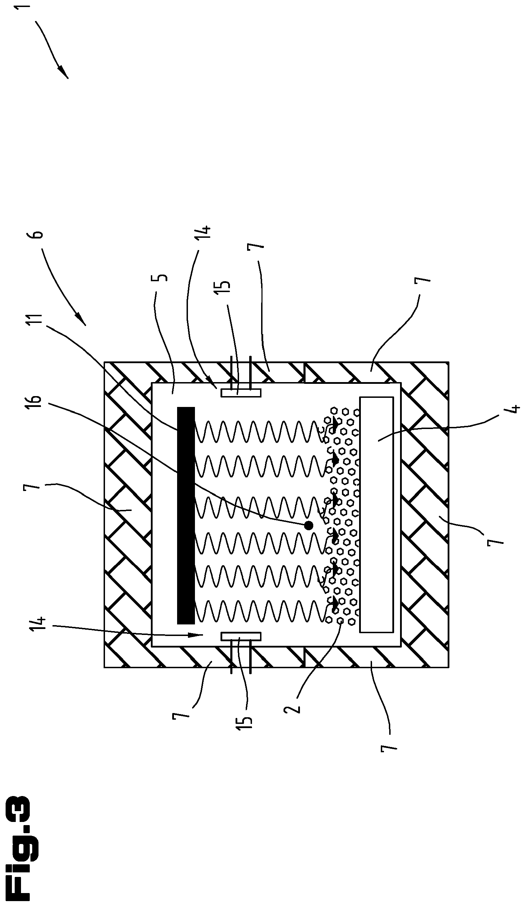

In der Fig. 3 ist eine weitere und gegebenenfalls für sich eigenständige Ausführungsform der Aufschäumvorrichtung 1 gezeigt, wobei wiederum für gleiche Teile gleiche Bezugszeichen bzw. Bauteilbezeichnungen wie in den vorangegangenen Figuren 1 und 2 verwendet werden.

Um unnötige Wiederholungen zu vermeiden, wird auf die detaillierte Beschreibung in den vorangegangenen Figuren 1 und 2 hingewiesen bzw. Bezug genommen.

Wie aus Fig. 3 ersichtlich, kann vorgesehen sein, dass die Fördervorrichtung 4 nicht als kontinuierliche Fördervorrichtung ausgebildet ist, sondern dass eine bestimmte Menge von Partikelschaummaterial 2 in den Innenraum 5 des Aufschäumofens 6 eingebracht wird und dort aufgeschäumt wird und anschließend wieder aus dem Aufschäumofen 6 entnommen wird. Dies kann als diskontinuierlicher Aufschäumprozess bezeichnet werden. Der Aufschäumofen 6 kann hierbei geteilt ausgeführt sein, sodass ein Teil abgehoben werden kann und der Innenraum 5 des Aufschäumofens 6 somit zum Einbringen des Partikelschaummaterials 2 zugänglich wird. Auch bei dieser Ausführungsvariante ist eine Temperiervorrichtung 14 vorgesehen, mittels welcher die Temperatur im Innenraum 5 des Aufschäumofens 6 geregelt werden kann.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Aufschäumvorrichtung
- 2: Partikelschaummaterial
- 3: Granulatbereitstellungsvorrichtung
- 4: Fördervorrichtung
- 5: Innenraum
- 6: Aufschäumofen
- 7: Wand
- 8: Einlassöffnung
- 9: Auslassöffnung
- 10: Entnahmevorrichtung
- 11: Infrarotstrahler
- 12: Abstand
- 13: Oberfläche Fördervorrichtung
- 14: Temperiervorrichtung
- 15: Wärmetauscher
- 16: Temperatursensor
- 17: Kühlmittelleitung

## Patentansprüche

1. Verfahren zum Aufschäumen eines expansionsfähigen Partikelschaummaterials (2) in Form eines Granulats, wobei das Verfahren folgende Verfahrensschritte umfasst:
- Einbringen des Partikelschaummaterials (2) in einen Innenraum (5) eines Aufschäumofens (6);
- Bestrahlen des Partikelschaummaterials (2) mittels einem im Innenraum (5) des Aufschäumofens (6) angeordneten Infrarotstrahlers (11);
- Herausführen des Partikelschaummaterials (2) aus dem Innenraum (5) des Aufschäumofens (6),
**dadurch gekennzeichnet, dass**
eine Abstrahlleistung des Infrarotstrahlers (11) festgelegt wird und die Temperatur im Innenraum (5) des Aufschäumofens (6) mittels einer Temperiervorrichtung (14) geregelt wird, sodass die Temperatur im Innenraum (5) des Aufschäumofens (6) unabhängig von der festgelegten Abstrahlleistung des Infrarotstrahlers (11) auf einen vorbestimmbaren Temperaturbereich geregelt wird.

2. Verfahren nach Anspruch 1, **dadurch gekennzeichnet, dass** der Temperaturbereich zwischen 80°C und 450°C, insbesondere zwischen 120°C und 170°C beträgt.

3. Verfahren nach Anspruch 1 oder 2, **dadurch gekennzeichnet, dass** die Temperatur im Innenraum (5) des Aufschäumofens (6) mittels einem im Innenraum (5) des Aufschäumofens (6) angeordneten Temperatursensor (16) erfasst wird.

4. Verfahren nach Anspruch 1 oder 2, **dadurch gekennzeichnet, dass** die Temperatur im Innenraum (5) des Aufschäumofens (6) durch eine Modellrechnung auf Basis der Geometrie und der Isolationswerte des Aufschäumofens (6), der eingestellten Abstrahlleistung des Infrarotstrahlers (11), und des Volumenstroms des Partikelschaummaterials (2) berechnet wird.

5. Verfahren nach einem der vorhergehenden Ansprüche, **dadurch gekennzeichnet, dass** die Leistung des Infrarotstrahlers (11) derart gewählt wird, dass dieser eine elektromagnetische Strahlung mit einer Wellenlänge im Bereich von 0,8µm bis 8,0µm, vorzugsweise von 2,5µm bis 3,5µm, abgibt.

6. Aufschäumvorrichtung (1) zum Aufschäumen eines expansionsfähigen Partikelschaummaterials (2), insbesondere zum Durchführen eines Verfahrens nach einem der vorhergehenden Ansprüche, mit einem Aufschäumofen (6), welcher einen Innenraum (5) zur Aufnahme des expansionsfähigen Partikelschaummaterials (2) aufweist, wobei ein Infrarotstrahler (11) ausgebildet ist, welcher im Innenraum (5) des Aufschäumofens (6) angeordnet ist, **dadurch gekennzeichnet, dass** eine Temperiervorrichtung (14) ausgebildet ist, mittels welcher die Temperatur im Innenraum (5) des Aufschäumofens (6) unabhängig von der eingestellten Abstrahlleistung des Infrarotstrahlers (11) auf einen vorbestimmbaren Temperaturbereich geregelt werden kann.

7. Aufschäumvorrichtung nach Anspruch 6, **dadurch gekennzeichnet, dass** die Temperiervorrichtung (14) zumindest einen Wärmetauscher (15) umfasst, welcher im Innenraum (5) des Aufschäumofens (6) angeordnet ist.

8. Aufschäumvorrichtung nach Anspruch 6 oder 7, **dadurch gekennzeichnet, dass** eine Fördervorrichtung (4) ausgebildet ist, welche zum Durchführen eines Volumenstroms des Partikelschaummaterials (2) durch den Aufschäumofen (6) dient.

9. Aufschäumvorrichtung nach Anspruch 8, **dadurch gekennzeichnet, dass** der Aufschäumofen (6) derart geschlossen ausgebildet ist, dass in dessen Betriebszustand eine Luftströmung zwischen dem Innenraum (5) des Aufschäumofens (6) und der Umgebung ausschließlich über eine Einlassöffnung (8) für die Fördervorrichtung (4) und eine Auslassöffnung (9) für die Fördervorrichtung (4) erfolgen kann.

10. Aufschäumvorrichtung nach einem der Ansprüche 6 bis 9, **dadurch gekennzeichnet, dass** in zumindest einer der Wände (7) des Aufschäumofens (6) eine Kühlmittelleitung (17) ausgebildet ist.

## Claims

1. A method for foaming an expandable particle foam material (2) in the form of granulate material, wherein the method comprises the following method steps:
- introducing the particle foam material (2) into the interior (5) of a foaming furnace (6);
- irradiating the particle foam material (2) by means of an infrared radiator (11) arranged in the interior (5) of the foaming furnace (6);
- discharging the particle foam material (2) out of the interior (5) of the foaming furnace (6),
**characterized in that**
a radiation output of the infrared radiator (11) is determined, and the temperature in the interior (5) of the foaming furnace (6) is controlled by means of a temperature control device (14), such that the temperature in the interior (5) of the foaming furnace (6) is controlled to a pre-determinable temperature range independently of the determined radiation output of the infrared radiator (11).

2. The method according to claim 1, **characterized in that** the temperature range is between 80 °C and 450 °C, in particular between 120 °C and 170 °C.

3. The method according to claim 1 or 2, **characterized in that** the temperature in the interior (5) of the foaming furnace (6) is detected by means of a temperature sensor (16) arranged in the interior (5) of the foaming furnace (6).

4. The method according to claim 1 or 2, **characterized in that** the temperature in the interior (5) of the foaming furnace (6) is calculated by a model calculation based on the geometry and the insulation values of the foaming furnace (6), the set radiation output of the infrared radiator (11), and the volume flow of the particle foam material (2).

5. The method according to one of the preceding claims, **characterized in that** the output of the infrared radiator (11) is selected such that it emits an electromagnetic radiation with a wavelength in the range of 0.8 µm to 8.0 µm, preferably of 2.5 µm to 3.5 µm.

6. A foaming device (1) for foaming an expandable particle foam material (2), in particular for carrying out a method according to one of the preceding claims, with a foaming furnace (6), which has an interior (5) for accommodating the expandable particle foam material (2), wherein an infrared radiator (11) is formed, which is arranged in the interior (5) of the foaming furnace (6), **characterized in that** a temperature control device (14) is formed by means of which the temperature in the interior (5) of the foaming furnace (6) can be controlled to a pre-determinable temperature range independently of the set radiation output of the infrared radiator (11).

7. The foaming device according to claim 6, **characterized in that** the temperature control device (14) comprises at least one heat exchanger (15), which is arranged in the interior (5) of the foaming furnace (6).

8. The foaming device according to claim 6 or 7, **characterized in that** a conveying device (4) is formed, which serves to conduct a volume flow of the particle foam material (2) through the foaming furnace (6).

9. The foaming device according to claim 8, **characterized in that** the foaming furnace (6) is designed to be closed such that, in its operating condition, an air flow between the interior (5) of the foaming furnace (6) and the environment can only take place via an inlet opening (8) for the conveying device (4) and an outlet opening (9) for the conveying device (4).

10. The foaming device according to one of claims 6 to 9, **characterized in that** in at least one of the walls (7) of the foaming furnace (6), a coolant line (17) is formed.

## Revendications

1. Procédé destiné à faire mousser un matériau en mousse de particules (2) expansible en forme de granulat, le procédé comprenant les étapes de procédé suivantes :
- mise en place du matériau en mousse de particules (2) dans un espace intérieur (5) d'un four de moussage (6) ;
- exposition du matériau en mousse de particules (2) à un rayonnement au moyen d'un radiateur infrarouge (11) disposé dans l'espace intérieur (5) du four de moussage (6) ;
- extraction du matériau en mousse de particules (2) à partir de l'espace intérieur (5) du four de moussage (6),
**caractérisé en ce**
**qu'**une puissance de rayonnement du radiateur infrarouge (11) est fixée, et la température dans l'espace intérieur (5) du four de moussage (6) est réglée au moyen d'un dispositif d'équilibrage de température (14) de telle sorte que la température dans l'espace intérieur (5) du four de moussage (6) est réglée sur une plage de température pouvant être prédéfinie, indépendamment de la puissance de rayonnement fixée du radiateur infrarouge (11).

2. Procédé selon la revendication 1, **caractérisé en ce que** la plage de température est comprise entre 80 °C et 450 °C, en particulier entre 120 °C et 170 °C.

3. Procédé selon la revendication 1 ou 2, **caractérisé en ce que** la température dans l'espace intérieur (5) du four de moussage (6) est détectée au moyen d'un capteur de température (16) disposé dans l'espace intérieur (5) du four de moussage (6).

4. Procédé selon la revendication 1 ou 2, **caractérisé en ce que** la température dans l'espace intérieur (5) du four de moussage (6) est calculée par une modélisation sur la base de la géométrie et des valeurs d'isolation du four de moussage (6), de la puissance de rayonnement réglée du radiateur infrarouge (11) et du flux volumique du matériau en mousse de particules (2).

5. Procédé selon l'une des revendications précédentes, **caractérisé en ce que** la puissance du radiateur infrarouge (11) est choisie de telle sorte que celui-ci produit un rayonnement électromagnétique d'une longueur d'onde dans la plage de 0,8 µm à 8,0 µm, de préférence de 2,5 µm à 3,5 µm.

6. Dispositif de moussage (1) destiné à faire mousser un matériau en mousse de particules (2) expansible, en particulier pour la réalisation d'un procédé selon l'une des revendications précédentes, avec un four de moussage (6) qui comporte un espace intérieur (5) destiné à recevoir le matériau en mousse de particules (2) expansible, un radiateur infrarouge (11) étant constitué, lequel est disposé dans l'espace intérieur (5) du four de moussage (6), **caractérisé en ce qu'**il est constitué un dispositif d'équilibrage de température (14) au moyen duquel la température dans l'espace intérieur (5) du four de moussage (6) peut être réglée sur une plage de température pouvant être prédéfinie, indépendamment de la puissance de rayonnement réglée du radiateur infrarouge (11).

7. Dispositif de moussage selon la revendication 6, **caractérisé en ce que** le dispositif d'équilibrage de température (14) comprend au moins un échangeur de chaleur (15) qui est disposé dans l'espace intérieur (5) du four de moussage (6).

8. Dispositif de moussage selon la revendication 6 ou 7, **caractérisé en ce qu'**il est constitué un dispositif de transport (4) qui sert à la réalisation d'un flux volumique du matériau en mousse de particules (2) à travers le four de moussage (6).

9. Dispositif de moussage selon la revendication 8, **caractérisé en ce que** le four de moussage (6) est constitué de façon fermée de telle sorte que, dans son état de fonctionnement, il peut survenir un écoulement d'air entre l'espace intérieur (5) du four de moussage (6) et l'environnement exclusivement via un orifice d'admission (8) pour le dispositif de transport (4) et via un orifice d'échappement (9) pour le dispositif de transport (4).

10. Dispositif de moussage selon l'une des revendications 6 à 9, **caractérisé en ce qu'**il est constitué une conduite de réfrigérant (17) dans au moins une des parois (7) du four de moussage (6).
